# EUROPÄISCHE PATENTANMELDUNG

(11) **EP 2 239 078 A1**
(43) Veröffentlichungstag der Anmeldung: **13.10.2010**
(21) Anmeldenummer: 10169771.2
(22) Anmeldetag: 08.05.2007
(51) Int. Cl.: B23D 49/16, B23D 51/16, B23D 49/11

(54) **Handwerkzeugmaschine, insbesondere Handsäge**

(30) Priorität: 07.07.2006 DE 102006031513
(62) Teilanmeldung aus: 07728898.3
(71) Anmelder: Robert Bosch GmbH, 70442 Stuttgart (DE)
(72) Erfinder: Saegesser, Daniel, 4900, Langenthal (CH); Felder, Sacha, 4513, Langendorf SO (CH)

(57) **Zusammenfassung**

Es wird eine Handwerkzeugmaschine, insbesondere Handsäge, angegeben, die innerhalb eines Gehäuses (11) einen elektrischen Antriebsmotor (12), ein diesem nachgeschaltetes Getriebe (13) und einen die Abtriebsdrehbewegung des Getriebes (13) in eine axial hin- und hergehende Arbeitsbewegung eines Hubelements (15) für den Antrieb eines Werkzeugs (16), insbesondere eines Sägeblattes, wandelnden Bewegungswandler (14) aufweist. Das Getriebe (13) und der Bewegungswandler (14) sind zu einer Getriebeeinheit (17) zusammengefasst. Die Getriebeeinheit (17) ist innerhalb eines robusten, biege- und verwindungssteifen Getriebegehäuses (40) angeordnet, das seinerseits in dem Gehäuse (11) aufgenommen ist. Das Gehäuse (11) ist aus flexiblem Kunststoff gebildet (Fig. 1).

## Beschreibung

### Stand der Technik

Die Erfindung geht aus von einer Handwerkzeugmaschine, insbesondere Handsäge, nach dem Oberbegriff des Anspruchs 1.

Es ist eine in ihrer Längserstreckung knickbare Handwerkzeugmaschine bekannt, die ein Winkelgetriebe und einen die Abtriebsdrehbewegung des Antriebsmotors in eine axial hin-und hergehende Arbeitsbewegung des Sägeblatts wandelnden Bewegungswandler aufweist, wobei diese unter Bildung eines kompakten Gerätes zu einer Getriebeeinheit zusammengefasst sind. Diese Handwerkzeugmaschine ist über Kabel netzabhängig speisbar. Sie ist noch recht voluminös gestaltet.

### Offenbarung der Erfindung

Die erfindungsgemäße Handwerkzeugmaschine, insbesondere Handsäge, mit den Merkmalen des Anspruchs 1 hat den Vorteil, dass diese klein, handlich und vor allem robust und leicht gestaltet ist. Das Gehäuse aus flexiblem Kunststoff vermag Kräfte beim Anschlagen oder beim Herunterfallen der Handwerkzeugmaschine ohne die Gefahr einer Beschädigung oder Zerstörung aufzunehmen.

Durch die in den weiteren Ansprüchen aufgeführten Maßnahmen sind vorteilhafte Weiterbildungen und Verbesserungen der im Anspruch 1 angegebenen Handwerkzeugmaschine möglich.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine schematische perspektivische Darstellung einer als Handsäge ausgebildeten Handwerkzeugmaschine bei einer entfernten Gehäuseschale,
- Fig. 2: eine schematische Seitenansicht einzelner Elemente der Handwerkzeugmaschine zusammen mit einem Teil ihres Getriebegehäuses,

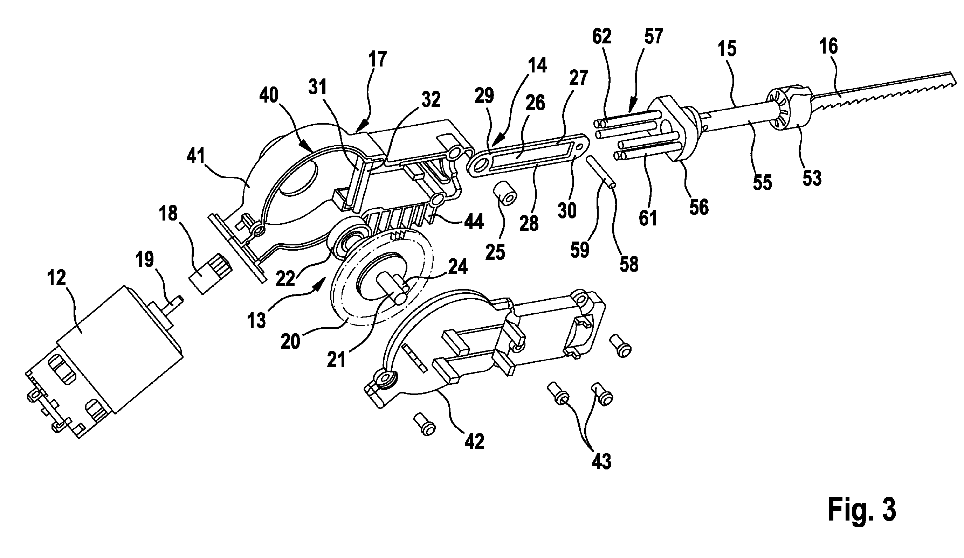

- Fig. 3: eine schematische perspektivische Explosionsdarstellung der in Fig. 2 gezeigten Elemente der Handwerkzeugmaschine,
- Fig. 4: einen schematischen Schnitt der Handwerkzeugmaschine in Pfeilrichtung IV-IV in Fig. 1, in vergrößertem Maßstab.

### Ausführungsformen der Erfindung

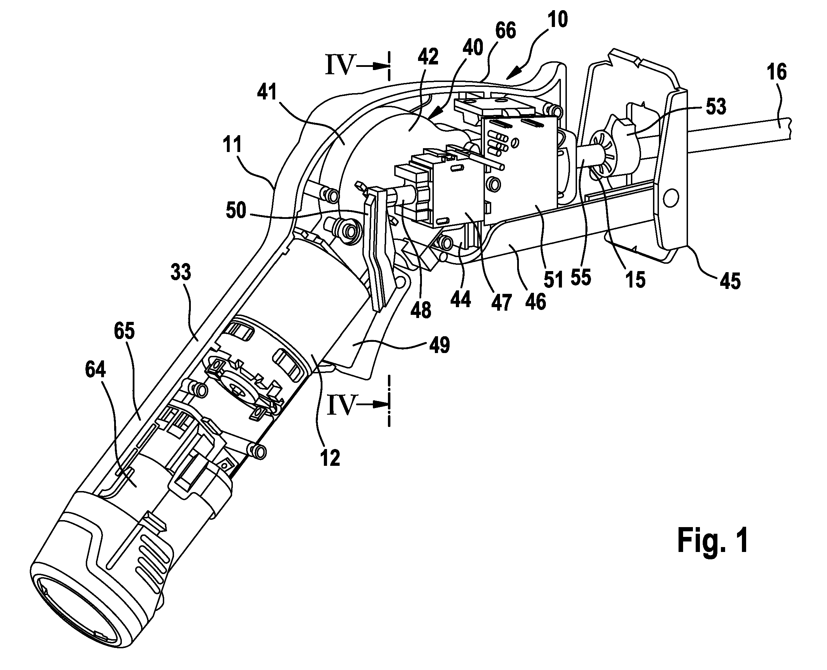

In Fig. 1 ist eine elektrische Handwerkzeugmaschine 10 gezeigt, die als kleine, handliche und robuste Handsäge ausgebildet ist, welche etwa wie ein Fuchsschwanz gestaltet ist. Diese Handwerkzeugmaschine 10 weist innerhalb eines Gehäuses 11 einen elektrischen Antriebsmotor 12, ein dem Antriebsmotor 12 nachgeschaltetes Getriebe 13 und einen Bewegungswandler 14 auf. Mittels des Bewegungswandlers 14 wird die Abtriebsdrehbewegung des Getriebes 13 in eine axial hin- und hergehende Arbeitsbewegung eines Hubelements 15 für den Antrieb eines Werkzeuges 16, insbesondere eines Sägeblattes, umgewandelt. Das Getriebe 13 und der Bewegungswandler 14 bilden einen Antriebsstrang und sind zu einer Getriebeeinheit 17 zusammengefasst.

Das Getriebe 13 ist als Winkelgetriebe ausgebildet. Es weist ein Abtriebsritzel 18, das auf die Motorwelle 19 aufgepresst ist, und ein Kronenzahnrad 20 auf, mit dem das Abtriebsritzel 18 getrieblich in Eingriff steht. Mittels dieses Getriebes 13 wird die Abtriebsdrehzahl des Antriebsmotors 12 auf eine geringere Drehzahl des Kronenzahnrades 20 untersetzt. Das Kronenzahnrad 20 weist einen eingepressten Lagerbolzen 21 auf, der zu einer Seite des Kronenzahnrades 20 absteht und mittels zumindest eines Rillenlagers, vorzugsweise mittels zweier axial benachbarter Rillenlager 22, 23, gelagert ist. Auf diese Weise ist das Kronenzahnrad 20 fliegend gelagert. Auf der den Rillenlagern 22, 23 gegenüberliegenden Seite trägt das Kronenzahnrad 20 einen exzentrisch angeordneten, eingepressten Bolzen 24, der in eine Hülse 25 an einem zugewandten Ende einer Pleuelstange 26 des Bewegungswandlers 14 eingreift. Über den Bolzen 24 wird die Abtriebsdrehbewegung des Kronenzahnrades 20 mittels der Pleuelstange 26 in eine lineare, hin- und hergehende Bewegung mit entsprechender Hublänge umgewandelt. Die Pleuelstange 26 ist aus zwei zueinander parallelen, in Abstand voneinander verlaufenden Längsstreben 27, 28 gebildet, die an beiden Enden über dortige Augen 29, 30 einstückig miteinander verbunden sind. Im Auge 29 ist die Hülse 25 aufgenommen. Im dem Kronenzahnrad 20 nahen Bereich ist die Pleuelstange 26 auf beiden Seiten von dazu quer, insbesondere etwa rechtwinklig, gerichteten Stiften 31, 32 übergriffen, die zur beidseitigen Führung der Pleuelstange 26 in Querrichtung dienen.

Die aus dem vorstehend beschriebenen Getriebe 13 und Bewegungswandler 14 durch Zusammenfassung gebildete Getriebeeinheit 17 ist innerhalb eines robusten, biege- und verwindungssteifen Getriebegehäuses 40 angeordnet. Dieses Getriebegehäuse 40 ist seinerseits im Gehäuse 11 aufgenommen. Das Getriebegehäuse 40 ist insbesondere aus Metall, z.B. Aluminium, gebildet und zweiteilig. Es besteht aus einem Formkörper in Form einer Gehäuseschale 41 und einem die Gehäuseschale 41 abdeckenden Gehäusedeckel 42, der über Befestigungsmittel 43, z.B. Schrauben, mit der Gehäuseschale 41 lösbar verbunden ist. Das Gehäuse 11 ist aus zwei Gehäuseschalen 33, 34 gebildet, die innerhalb einer zum Gehäuse 11 symmetrischen Formtrennebene 35 lösbar miteinander verbunden sind. Dieses Gehäuse 11 besteht in vorteilhafter Weise aus einem flexiblen Kunststoff. Diese Materialgestaltung ist möglich aufgrund der kompakten Bauweise und dadurch, dass die Getriebeeinheit 17 im robusten, biege- und verwindungssteifen Getriebegehäuse 40 aufgenommen ist. Das so gestaltete Gehäuse 11 aus flexiblem Kunststoff ist in der Lage, beim etwaigen Herabfallen der Handwerkzeugmaschine 10 Kräfte aufzunehmen. Die Handwerkzeugmaschine 10 ist auf diese Weise in hohem Maße gegen Beschädigung beim Herunterfallen selbst aus großer Höhe geschützt.

Am Getriebegehäuse 40, insbesondere an der Gehäuseschale 41, ist im Bereich unterseitig des Bewegungswandlers 14 ein Rippenkörper 44 angeordnet, der als Kühlkörper und biege- und verwindungssteife Halterung für eine Fußplatte 45 ausgebildet und mit dem Getriebegehäuse 40 einstückig ist. Die Fußplatte 45 sitzt an einem Halter 46, der am Rippenkörper 44 befestigt ist.

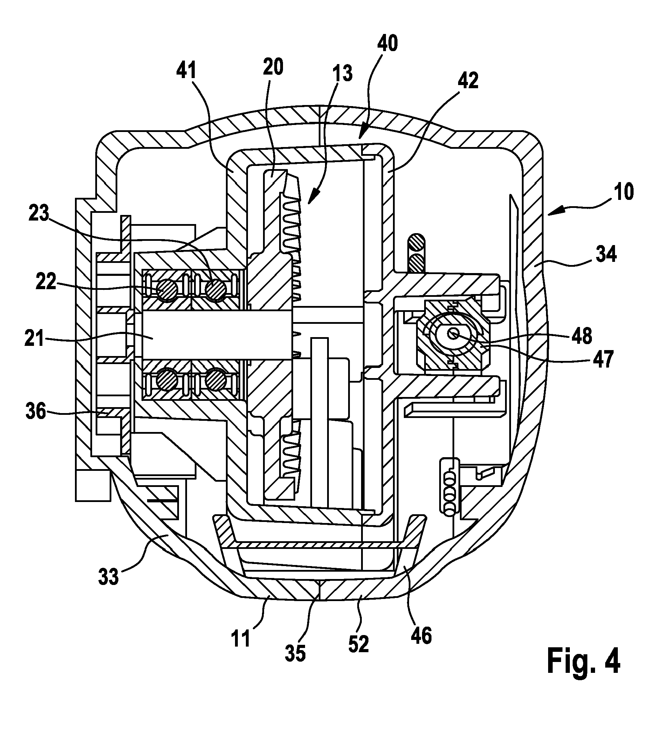

Seitlich neben der Getriebeeinheit 17 und etwa parallel zu dieser ist ein nur schematisch angedeuteter elektrischer Schalter 47 angeordnet, dessen Betätigungsglied 48 mit einem Betätiger 49, z.B. Kippdrücker, über einen Hebel 50 dieses gekoppelt ist. Ebenfalls seitlich neben der Getriebeeinheit 17, z.B. etwa parallel dazu, ist ferner eine nur schematisch angedeutete elektronische Überwachungseinrichtung 51 angeordnet, die z.B. für die Überwachung der Stromaufnahme vorgesehen ist. Sowohl der elektrische Schalter 47 als auch die elektronische Überwachungseinrichtung 51 sitzen auf der Außenseite des Gehäusedeckels 42, die der Gehäuseschale 41 abgewandt ist. Auch diese Anordnung ermöglicht eine kleine, kompakte Bauweise der Handwerkzeugmaschine 10. Die in Bezug auf die etwa symmetrisch verlaufende Formtrennebene 35 quer dazu versetzte Anordnung des Schalters 47 und der Überwachungseinrichtung 51 führt dazu, dass der Betätiger 49, z.B. Kippdrücker, in Bezug auf diese Formtrennebene 35 beider Gehäuseschalen 33, 34 quer versetzt angeordnet ist, wie auch die Lage der in Fig. 4 angedeuteten Durchtrittsöffnung 52 für den Betätiger 49 erkennen lässt. Insbesondere aus Fig. 4 wird ferner die fliegende Lagerung des Kronenzahnrades 20 mittels der beiden Rillenlager 22, 23 deutlich, die in der Gehäuseschale 41 aufgenommen sind. Das Getriebe 13 weist ein davon angetriebenes Lüfterrad 36 auf, das auf dem Lagerbolzen 21 des Kronenzahnrades 20 angeordnet ist. Mittels des Lüfterrades 36, das zusätzlich zum Motorlüfter am Antriebsmotor 12 vorgesehen ist, ist in einfacher Weise eine Wärmeableitung vom Getriebe 13 und eine Kühlung z.B. der elektronischen Überwachungseinrichtung 51 möglich. Zur Abfuhr erwärmter Luft dienen in üblicher Weise im Gehäuse 11 vorgesehene Kanäle und auf der der Fußplatte 45 zugewandten Gehäuseseite vorgesehene Öffnungen, über die die Abluft abgeführt wird, wobei die Abluft gleichzeitig als Blasluft zur Beseitigung von Partikeln an der mittels der Handwerkzeugmaschine 10 bearbeiteten Stelle, z.B. von Sägespänen, dient.

Das Hubelement 15 trägt an dem Ende, das dem Getriebegehäuse 40 abgewandt ist, ein nur schematisch angedeutetes Spannsystem 53 für die Wechselhalterung eines Werkzeuges 16, z.B. eines Sägeblatts. Das Spannsystem 53 ist in üblicher Weise gestaltet und ermöglicht die Einspannung eines Werkzeuges 16 sowohl in einer Position als auch in einer demgegenüber um 180° gedrehten Position. Dies erhöht die Zugänglichkeit zu schwierig erreichbaren Stellen beim Arbeiten mit der Handwerkzeugmaschine 10, die somit auch an schwer zugänglichen Stellen eingesetzt werden kann.

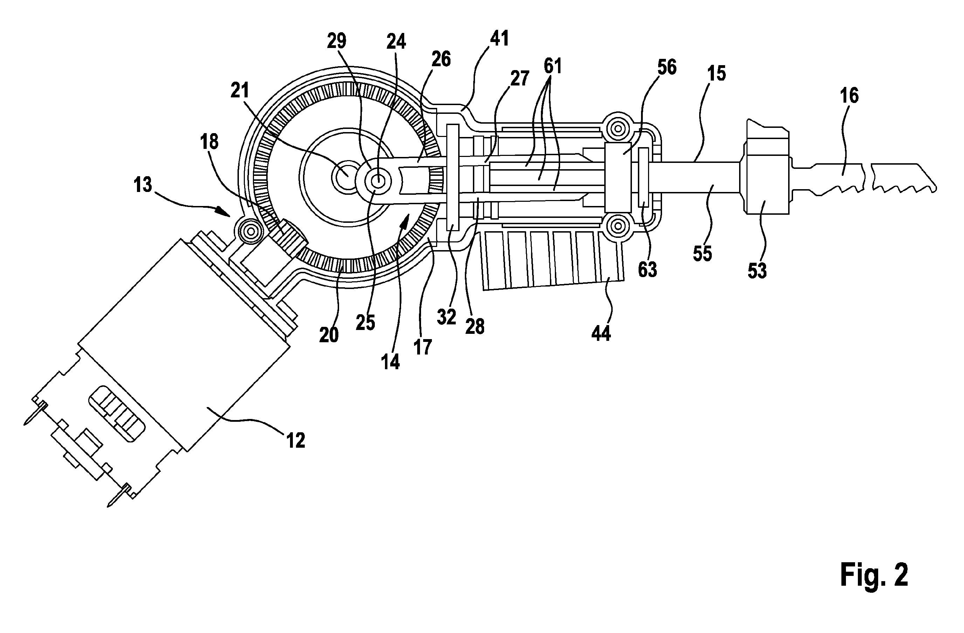

Das vom Bewegungswandler 14 hin- und hergehend antreibbare Hubelement 15 ist als Stange 55 ausgebildet, die aus dem Getriebegehäuse 40 herausragt. Im Getriebegehäuse 40 ist ein Gleitlager 56 angeordnet, in dem das Hubelement 15, insbesondere in Form der Stange 55, hin und her verschieblich gelagert und geführt ist. Das Gleitlager 56 ist zwischen der Gehäuseschale 41 und dem Gehäusedeckel 42 undrehbar aufgenommen und vom zugewandten Ende des Hubelements 15, insbesondere der Stange 55, durchsetzt. Die Anordnung ist ferner so getroffen, dass zwischen dem Gleitlager 56 und dem Hubelement 15, insbesondere der Stange 55, wirksame Führungsmittel zur Führung des Hubelements 15 vorgesehen sind. Diese Führungsmittel können aus einer unrunden und/oder eckigen Querschnittsform des Hubelements 15 und der von diesem durchsetzten Bohrung des Gleitlagers 56 gebildet sein. Auf diese Weise werden vom Gleitlager 56 auch in das Hubelement 15 eingeleitete Momente aufgenommen. Beim gezeigten Ausführungsbeispiel sind die Führungsmittel zwischen Gleitlager 56 und Hubelement 15 aus am Gleitlager 56 befindlichen Längsführungen 57, die vom Gleitlager 56 abstehen, und aus mindestens einem am Hubelement 15 im Bereich des Auges 30 angreifenden Verbindungselement 58 gebildet, mittels dessen der Bewegungswandler 14 abtriebsseitig mit dem Hubelement 15 verbunden ist, wobei dieses Verbindungselement 58 mittels der Längsführungen 57 in Längs- und/oder Querrichtung gelagert und geführt ist. Das mindestens eine Verbindungselement 58 besteht z.B. in einfacher Weise aus einem Querstift 59, der an dem dem Getriebe 13 abgewandten Ende der Pleuelstange 26 sowie am der Pleuelstange 26 zugewandten Ende des Hubelements 15 angreift, z.B. in einer das Auge 30 aufnehmenden Gabel am Ende des Hubelements 15 vorgesehene Bohrungen 60 quer durchsetzt. Die Längsführungen 57 stehen vom Gleitlager 56 in Richtung zur Pleuelstange 26 ab, die dazwischen verläuft. Die Längsführungen 57 des Gleitlagers 56 weisen zueinander etwa parallele Führungsstifte 61 auf einer Seite und 62 auf der anderen Seite der Pleuelstange 26 auf, von denen auf jeder Seite z.B. drei Führungsstifte vorgesehen sein können. Das Verbindungselement 58, insbesondere der Querstift 59, ragt auf beiden Seiten mit jeweiligen Endabschnitten aus den Bohrungen 60 des Hubelements 15 heraus und ist mit diesen beidseitigen Endabschnitten zwischen zwei Führungsstiften 61 auf einer Seite und 62 auf der anderen Seite aufgenommen, wobei diese beiden Führungsstifte 61 bzw. 62 sich etwa in zueinander parallelen Ebenen erstrecken, die etwa parallel zu der die Pleuelstange 26 enthaltenden Ebene verlaufen. Diese zwei beidseitigen Führungsstifte 61 und 62 wirken für den jeweils dazwischen befindlichen Endabschnitt des Verbindungselements 58 ähnlich wie jeweilige Längsführungsnuten. Der je Seite vorgesehene dritte Führungsstift 61 bzw. 62 erstreckt sich weiter außen in Abstand von der jeweiligen, vorstehend beschriebenen Ebene, innerhalb der die Führungsstiftpaare 61 bzw. 62 verlaufen. Dieser Querabstand entspricht etwa der Länge des Verbindungselements 58. Dadurch ist erreicht, dass das Verbindungselement 58 mit dem jeweiligen etwa stirnseitigen Ende am äußeren Führungsstift 61 bzw. 62 anliegt und nicht nur in Längsrichtung, sondern insbesondere auch in Querrichtung gelagert und geführt ist. Diese Gestaltung der Führungsmittel ist besonders einfach und kostengünstig. Wie aus Fig. 2 ersichtlich ist, können auf der Seite des Gleitlagers 56, die dem Spannsystem 53 zugewandt ist, den Stiften 31, 32 analoge Stifte 63 vorgesehen sein, zwischen denen die Hubstange 55 zusätzlich geführt ist. Die beschriebene Lagerung für das Hubelement 15 einschließlich Führung dieses ist einfach und kostengünstig und erlaubt eine schnelle und leichte Montage.

Die Handwerkzeugmaschine 10 ist von mindestens einer Batterie oder vorzugsweise mindestens einem Akku gespeist, der lediglich schematisch dargestellt und mit 64 bezeichnet ist. Bei diesem mindestens einen Akku 64 handelt es sich um eine Lithium-Ionen (Li-lon)-Zelle zur Speisung des Antriebsmotors 12.

Das Gehäuse 11 weist einen als Griffteil dienenden ersten Abschnitt 65 und einen sich einstückig und unter einem stumpfen Winkel geneigt an den ersten Abschnitt 65 anschließenden zweiten Abschnitt 66 auf. Der mindestens eine Akku 64 und auch der elektrische Antriebsmotor 12 sind im ersten Abschnitt 65 aufgenommen, während im zweiten Abschnitt 66 das Getriebegehäuse 40 mit der enthaltenen Getriebeeinheit 17 enthalten sind.

Die Handwerkzeugmaschine 10 ist klein, leicht, handlich und robust und aufgrund der Stromversorgung mittels mindestens einer Batterie, insbesonderes eines Akkus 64, besonders einfach und leicht zu handhaben. Ferner ist die Handwerkzeugmaschine 10 in hohem Maße betriebssicher und auch sicher gegen Beschädigungen durch etwaiges Anschlagen oder Herunterfallen.

## Patentansprüche

1. Handwerkzeugmaschine, insbesondere Handsäge, die innerhalb eines Gehäuses (11) einen elektrischen Antriebsmotor (12), ein diesem nachgeschaltetes Getriebe (13) und einen die Abtriebsdrehbewegung des Getriebes (13) in eine axial hin- und hergehende Arbeitsbewegung eines Hubelements (15) für den Antrieb eines Werkzeuges (16), insbesondere eines Sägeblatts, wandelnden Bewegungswandler (14) aufweist, wobei das Getriebe (13) und der Bewegungswandler (14) zu einer Getriebeeinheit (17) zusammengefasst sind, **dadurch gekennzeichnet, dass** die Getriebeeinheit (17) aus Getriebe (13) und Bewegungswandler (14) innerhalb eines robusten, biege- und verwindungssteifen Getriebegehäuses (40) angeordnet ist, das seinerseits in dem Gehäuse (11) aufgenommen ist, und dass das Gehäuse (11) aus flexiblem Kunststoff gebildet ist.

2. Handwerkzeugmaschine nach Anspruch 1, **dadurch gekennzeichnet, dass** das Getriebegehäuse (40) aus Metall, z.B. Aluminium, gebildet ist.

3. Handwerkzeugmaschine nach Anspruch 1 oder 2, **dadurch gekennzeichnet, dass** das Getriebegehäuse (40) zweiteilig ist und aus einer Gehäuseschale (41) und einem die Gehäuseschale (41) abdeckenden Gehäusedeckel (42) besteht, der mit der Gehäuseschale (41) lösbar verbunden ist.

4. Handwerkzeugmaschine nach einem der Ansprüche 1 bis 3, **dadurch gekennzeichnet, dass** seitlich neben der Getriebeeinheit (17), insbesondere auf der Außenseite des Gehäusedeckels (42), ein elektrischer Schalter (47) angeordnet ist, dessen Betätigungsglied (48) mit einem aus dem Gehäuse (11) herausragenden Betätiger (49), z.B. Kippdrücker, gekoppelt ist.

5. Handwerkzeugmaschine nach einem der Ansprüche 1 bis 4, **dadurch gekennzeichnet, dass** seitlich neben der Getriebeeinheit (17), insbesondere auf der Außenseite des Gehäusedeckels (42), eine elektronische Überwachungseinrichtung (51) für die Überwachung der Stromaufnahme angeordnet ist.

6. Handwerkzeugmaschine nach einem der Ansprüche 1 bis 5, **dadurch gekennzeichnet, dass** das Getriebe (13) ein mit einem Abtriebsritzel (18) des Antriebsmotors (12) kämmendes Kronenzahnrad (20) mit zu einer Seite abstehendem Lagerbolzen (21) aufweist, der mittels zumindest eines Rillenlagers, vorzugsweise mittels zweier axial benachbarter Rillenlager (22, 23), im Getriebegehäuse (40), insbesondere dessen Gehäuseschale (41), gelagert ist.

7. Handwerkzeugmaschine nach einem der Ansprüche 1 bis 6, **dadurch gekennzeichnet, dass** das Hubelement (15) als aus dem Getriebegehäuse (40) herausragende Stange (55) mit an einem Ende angeordnetem Spannsystem (53) für die Wechselhalterung eines Werkzeuges (16), insbesondere eines Sägeblatts, ausgebildet ist.

8. Handwerkzeugmaschine nach einem der Ansprüche 1 bis 7, **dadurch gekennzeichnet, dass** im Getriebegehäuse (40) ein Gleitlager (56) angeordnet ist, in dem das Hubelement (15) hin und her verschieblich gelagert und geführt ist.

9. Handwerkzeugmaschine nach Anspruch 8, **gekennzeichnet durch** zwischen dem Gleitlager (56) und dem Hubelement (15) wirksame Führungsmittel (57, 58, 59) zur Führung des Hubelements (15).

10. Handwerkzeugmaschine, insbesondere nach einem der Ansprüche 1 bis 9, **dadurch gekennzeichnet, dass** im Gehäuse (11) mindestens ein Akku (64), vorzugsweise mindestens eine Lithium-lonen (Li-lon)-Zelle, zur Speisung des Antriebsmotors (12) enthalten ist.

11. Handwerkzeugmaschine nach einem der Ansprüche 1 bis 10, **dadurch gekennzeichnet, dass** das Gehäuse (11) einen als Griffteil dienenden ersten Abschnitt (65) und einen das Getriebegehäuse (40) enthaltenden, sich einstückig und unter einem stumpfen Winkel geneigt an den ersten Abschnitt (65) anschließenden zweiten Abschnitt (66) aufweist.

12. Handwerkzeugmaschine nach Anspruch 11, dass der Antriebsmotor (12) und der mindestens eine Akku (64) innerhalb des als Griffteil dienenden ersten Abschnitts (65) des Gehäuses (11) aufgenommen sind.

13. Handwerkzeugmaschine nach einem der Ansprüche 6 bis 12, **dadurch gekennzeichnet, dass** das Kronenzahnrad (20) fliegend gelagert ist.

14. Handwerkzeugmaschine nach einem der Ansprüche 1 bis 13, **dadurch gekennzeichnet, dass** das Getriebegehäuse (40) aus einem Formkörper in Form einer Gehäuseschale (41) und einem die Gehäuseschale (41) abdeckenden Gehäusedeckel (42), der über Befestigungsmittel 43, z.B. Schrauben, mit der Gehäuseschale 41 lösbar verbunden ist, besteht.

15. Handwerkzeugmaschine nach einem der Ansprüche 7 bis 14, **dadurch gekennzeichnet, dass** das Spannsystem (53) in üblicher Weise gestaltet ist und die Einspannung eines Werkzeuges (16) sowohl in einer Position als auch in einer demgegenüber um 180° gedrehten Position ermöglicht.

16. Handwerkzeugmaschine nach einem der vorhergehenden Ansprüche, **dadurch gekennzeichnet, dass** sie wie ein Fuchsschwanz gestaltet ist.

17. Handwerkzeugmaschine nach einem der vorhergehenden Ansprüche, **dadurch gekennzeichnet, dass** das Getriebe (13) und der Bewegungswandler (14) einen Antriebsstrang bilden und zu einer Getriebeeinheit (17) zusammengefasst sind.

18. Handwerkzeugmaschine nach einem der vorhergehenden Ansprüche, **dadurch gekennzeichnet, dass** das Getriebe (13) als Winkelgetriebe ausgebildet ist.

19. Handwerkzeugmaschine nach einem der vorhergehenden Ansprüche, **dadurch gekennzeichnet, dass** das Getriebe (13) ein Abtriebsritzel (18), das auf eine Motorwelle (19) des Antriebsmotors (12) aufgepresst ist, und ein Kronenzahnrad (20), mit dem das Abtriebsritzel (18) getrieblich in Eingriff steht, aufweist.

20. Handwerkzeugmaschine nach einem der Ansprüche 6 bis 19, **dadurch gekennzeichnet, dass** mittels des Getriebes (13) die Abtriebsdrehzahl des Antriebsmotors (12) auf eine geringere Drehzahl des Kronenzahnrades (20) untersetzt wird.

21. Handwerkzeugmaschine nach einem der Ansprüche 6 bis 20, **dadurch gekennzeichnet, dass** das Kronenzahnrad (20) auf der des zumindest einen Rillenlagers (22, 23) gegenüberliegenden Seite einen exzentrisch angeordneten, eingepressten Bolzen (24) trägt, der in eine Hülse (25) an einem zugewandten Ende einer Pleuelstange (26) des Bewegungswandlers (14) eingreift.

22. Handwerkzeugmaschine nach einem der vorhergehenden Ansprüche, **dadurch gekennzeichnet, dass** das Gehäuse (11) aus zwei Gehäuseschalen (33, 34) gebildet ist, die innerhalb einer zum Gehäuse (11) symmetrischen Formtrennebene (35) lösbar miteinander verbunden sind.

23. Handwerkzeugmaschine nach einem der vorhergehenden Ansprüche, **dadurch gekennzeichnet, dass** das Gehäuse (11) in der Lage ist, beim etwaigen Herabfallen der Handwerkzeugmaschine (10) Kräfte aufzunehmen..

24. Handwerkzeugmaschine nach einem der Ansprüche 8 bis 23, **dadurch gekennzeichnet, dass** das Gleitlager (56) zwischen der Gehäuseschale (41) und dem Gehäusedeckel (42) undrehbar aufgenommen ist.

25. Handwerkzeugmaschine nach einem der Ansprüche 8 bis 24, **dadurch gekennzeichnet, dass** das Gleitlager (56) vom zugewandten Ende des Hubelements (15) durchsetzt ist.

26. Handwerkzeugmaschine nach einem der Ansprüche 8 bis 25, **dadurch gekennzeichnet, dass** das Gleitlager (56) vom Hubelement (15) eingeleitete Momente aufnimmt.
